Europäisches Patentamt

European Patent Office

Office européen des brevets

⑩

(11) Publication number: **0 039 106**

**A2**

(12) **EUROPEAN PATENT APPLICATION**

(21) Application number: **81200412.5**

(22) Date of filing: **13.04.81**

(51) Int. Cl.³: **A 23 G 3/02**
**A 23 G 3/12**

(30) Priority: **25.04.80 BE 882976**

(43) Date of publication of application:
**04.11.81 Bulletin 81/44**

(84) Designated Contracting States:
**AT CH DE FR GB IT LI LU NL SE**

(71) Applicant: **Aquarius, Coenrardus Hubertus**
**Heilig Wammesstraat 24**
**B-3680 Maaseik(BE)**

(72) Inventor: **Aquarius, Coenrardus Hubertus**
**Heilig Wammesstraat 24**
**B-3680 Maaseik(BE)**

(74) Representative: **Donné, Eddy**
**M.F.J.Bockstael Arenbergstraat 13**
**B-2000 Anvers(BE)**

(54) Machine for the manufacture of sugar-candy and mould for such machine.

(57) The invention pertains to a machine for the manufacture of sugar-candy, more particularly lollies, said machine comprising a number of moulds having each a die (1-2) and at least one punch (3) for stamping the sugar material deposited in the die (1-2) into the desired shape, said punch (3) being reciprocated in the die (1-2), said machine comprising also means for reciprocating the punches (3) in the dies (1-2), said means comprising themselves, per punch, one rider (10) mounted thereon and projecting outside the die (1-2) through an opening (9) provided therein, and at least two pressure elements (14-15) relative to which the dies (1-2) may be shifted together with the punches (3) moving therein, whereby, during said relative shifting, the punches (3) or the ends (projecting outside the die) of the riders (10) mounted on said punches (3) are contacted so that said punches (3) are pushed more deeply in the die (1-2) from their initial position or back to their initial position, characterized in that it comprises, per punch (3), one lock allowing the punch (3) to shift freely when it is introduced into the die (1-2), while blocking up immediately said punch (3) when it is shifted in the other direction, the shifting in the last mentioned direction being allowed only after unlocking.

./...

Croydon Printing Company Ltd.

_Fig. 1_

- 1 -

"<u>Machine for the manufacture of sugar-candy and mould for such</u>
<u>machine</u>"

This invention relates to a machine for the manufacture of
sugar-candy, particularly lollies, said machine comprising a
number of moulds having each a die and at least one punch for
stamping the sugar material disposed in the die into the desired shape, said punch being reciprocated in the die, said
machine comprising also means for reciprocating the punches in
the dies, said means having themselves, per punch, one rider
mounted thereon and projecting outside the die through an
opening provided therein, and at least two pressure elements
relative to which the dies together with the punches reciprocating therein may be moved, whereby the punches, respectively
the ends of the riders mounted on said punches, which are
projecting outside the die, are contacting during said relative
movement, so that said punches are pushed from their initial
position more deeply in the die or back to their initial position.

In known machines of said type, the pressure elements are
generally firmly mounted on the frame, whereas the dies together with the punches may be moved relative to said frame.

The dies may be of the type without any valve or they may
consist of an inner body and a moving valve. In the latter
case, the valve closes essentially the inner body during
stamping, but said valve is in opened position when the sugar material is introduced or when the lolly is removed.  Said moving valves may be also, e.g., assembled into an endless chain contacting locally the drum on which the inner bodies are mounted with the punches.

In all said known machines, when a die is moved relative to one pressure element, each punch located in said die is contacting said pressure element so that, when the die is moved further, said element pushes the punch into the die.  When the die is moved still further, the end of the rider mounted on the punch, which projects outwardly from said die, is contacting the second pressure element so that, when the die is moved further, said second pressure element pushes the rider and accordingly also the punch back to their initial positions.

While in most cases, the punch may be pushed back to its initial position immediately after moulding the lolly, with determined kinds of sugar materials, namely with nougat, it is necessary to keep the punch for a determined time, which may be up to one minute, in its maximum introduction position into the die.  Should the punch too rapidly be retracted to its initial position, with such particular kinds of sugar materials, the lolly would be disintegrated.

In order to maintain momentarily the punch in its maximum introduction position into the die, in the known machines, the pressure element pushing the punch inwardly is made with a sufficient length.  During all the time in which the punch must be maintained, said punch is always moved together with the die relative to the element so that, in these known machines, said pressure element can be very long, thereby increasing the cost price of the machine.  Most frequently, the machine must be designed with a length larger than otherwise needed, so that it requires more space.

Considering that the same element pushes simultaneously several punches in several dies, while keeping the punches in their introduced position into a number of other dies, a trouble in the stamping through one of the punches may also give rise to a defect in the stamping through the other punches which are also contacting the pressure element. It is namely possible that too much sugar material is introduced into a determined die. As a result, the punch of said die is not essentially pushed to a sufficient depth into the die. Thus, the pressure element which, in the expectation of such cases, is resiliently mounted relative to the frame, is pushed on a short distance away from the die through the concerned punch, so that said element is no more able to push the punch down to a sufficient depth in the immediately following die or dies. In other words, when too much sugar material is introduced into one die, said sugar material will not be sufficiently compressed in the following die or dies in which the correct amount of sugar material has been introduced. It is apparent that the longer is the pressure element, the greater is the likelihood of thereby having not sufficient compressed amounts of sugar material and thus of obtaining defective lollies.

Now, the purpose of this invention is to prevent all these drawbacks and to provide a machine for the manufacture of sugar-candy wherein the punches may be kept for a determined time in their maximum introduction position into the dies, said machine being however relatively cheap and requiring a relatively small space, while additionally the likelihood of obtaining insufficiently compressed lollies is relatively small, even when the punches are momentarily maintained in their maximum introduction position.

For this purpose, the machine comprises, per punch, a lock allowing the free movement of the punch when it is introduced into the die, but blocking up immediately said punch when it is moved in the other direction and allowing the movement in the last intended direction only after unlocking.

Thus, the punch may be introduced into the die by using the

- 4 -                                        0039106

same element as in the machines wherein the punch must not be firmly maintained. As soon as the stamping is ended, the punch remains then automatically in its rest position up to the unlocking.

In a particular embodiment of this invention, the lock of each punch is the rider itself the end of which projecting outside the die forms then a laterally thickened head which, on both sides of the opening provided in the die and through which the rider projects, may be moved along the outer side of the die, while cooperating with said outer side along which it may be thereby freely shifted during the introduction of the punch, while being however firmly maintained through the die without unlocking when trying to move the punch in the other direction. On both sides of the opening provided in the die and through which the rider projects, the thickened head is efficient with one side being situated immediately along the outer side of the die, whereas the rider is in a manner pivotally mounted about a geometrical axis which, at a distance from the rider head situated outside the die, is directed transversally to the longitudinal axis of the punch, i.e. to the shifting direction thereof so that, when the rider is tilted in the stamping direction, namely in the shifting direction of the punch when it is introduced into the die, said tilting occurring when the punch is retracted from the die, the above-mentioned side is firmly clamped against the outer side of the die, thereby preventing any shifting, whereas the machine comprises means for back pivoting the rider from the last mentioned tilted position so that the rider is no more clamped and is thereby unlocked.

Preferably, the rider may be tilted in the stamping direction until the above-mentioned side of its head is firmly clamped on the die, whereas the tilting in the opposite direction is limited and also in the maximum back tilted position which is taken by the rider when the punch is introduced, the above-mentioned side cannot be firmly clamped against the outer side of the die.

Preferably, the above-mentioned side of the rider head, which is situated along the outer side of the die, extends substantially on the side (remote from the stamping location for the sugar material) of the theoretical surface passing through the geometrical tilting axis of the rider and directed perpendicularly to the shifting direction of the punch, said side extending not at all or only on a small distance on the other side of said theoretical surface.

The rider is preferably back tilted by means of a third pressure element pushing the rider and accordingly also the punch back to their initial positions when the die is shifted with the punch relative to said element.

This invention relates also to a machine of the above-mentioned type wherein the dies are each additionally provided with an inner body and a valve hingedly mounted thereon.

The above description relative to the punches of the dies is also valuable for the valves of said dies if they are of the type provided with hinged valves. Thus, for determined kinds of sugar materials, more particularly nougat, after stamping the lolly, not only the punch must be kept introduced for a period, but the valve must be also kept tight at least during the same period. However, the valves of the dies are generally rotated into tight position in the same manner as the introduction of the punches, namely by means of a pressure element. Said pressure element is generally mounted on the frame, whereas the dies are shifted along said pressure element which they contact at the intended moment of said shifting.

In known machines of that type, the valves are kept tight during a determined time by giving a sufficient length to the pressure element, which thus increases the cost price of the machine and very frequently requires a longer machine, thereby needing a larger space.

Now, it is also a purpose of this invention to prevent said drawback and to provide a machine for the manufacture of sugar-candy wherein the valves may be kept in tight position during the desired period, said machine being however relatively cheap and requiring a relatively small space, even if said period is a relatively long one.

For this purpose, the machine comprises, per valve, a lock blocking automatically the valve in closed position when it is closed, said machine comprising also means for removing the locks from the locking position, thereby allowing to open again the corresponding valves.

In a particular embodiment of this invention, the lock is a holding pawl which, at a distance from the axis about which the valve is hinged relative to the inner body, is, on one hand, hingedly mounted on one of the elements formed by the inner body and the valve and which, on the other hand, cooperates, through one end, with a portion of the other element so that, at least in one position, it extends between the two elements, while preventing any shifting of the latter relative to each other, whereas the means removing said lock from the locking position, are means for rotating the holding pawl on an angle.

Preferably, the holding pawl is hingedly mounted on the valve, near the end of the latter which is the farthest remote from the pivoting axis of the valve, whereas the other end of the pawl cooperates with a portion of said inner body which projects outside the remainder of said body at the side of the pivoting axis of the valve.

In a remarkable embodiment of this invention, the means provided for rotating the holding pawl in view of unlocking comprise a small lever which is hingedly mounted on one of the elements formed by the inner body and the valve and which may cooperate with the holding pawl, and also means for rotating said small lever.

The means for rotating the small lever are efficiently formed by a pressure element.

Said small lever is preferably hingedly mounted on the valve, at the side of the pivoting axis.

Then, the pressure element which rotates the small lever for removing the holding pawl from the locking position, is advantageously the same pressure element which rotates the valve in opened position.

This invention relates also to a mould of a machine according to one of the preceding embodiments.

Other features and advantages of the invention will be more apparent from the following description of a machine for the manufacture of sugar-candy and of a mould for such machine according to the invention; this description is given only by way of example without limiting the invention; the reference numbers are those of the enclosed drawings.

Figure 1 is a cross-section through a portion of a machine for the manufacture of sugar-candy according to the invention, taken in the longitudinal direction through a mould of said machine;

Figure 2 is a cross-section taken on the line II-II of Figure 1, but at a larger scale;

Figure 3 is a cross-section taken on the line III-III of Figure 1, on the same scale as in Figure 2.

In the various figures, the same reference numbers relate to the same elements.

The machine as shown in the figures comprises, as known per se, a number of moulds having each a die consisting of an inner body 1 and a valve 2, and a punch 3 sliding in the die.

The dies 1, 2 may be shifted together with the punch 3 located therein relative to a frame not shown in the drawings. The inner bodies 1 and the punches 3 are extending in their longitudinal direction perpendicularly to the shifting direction of the dies.

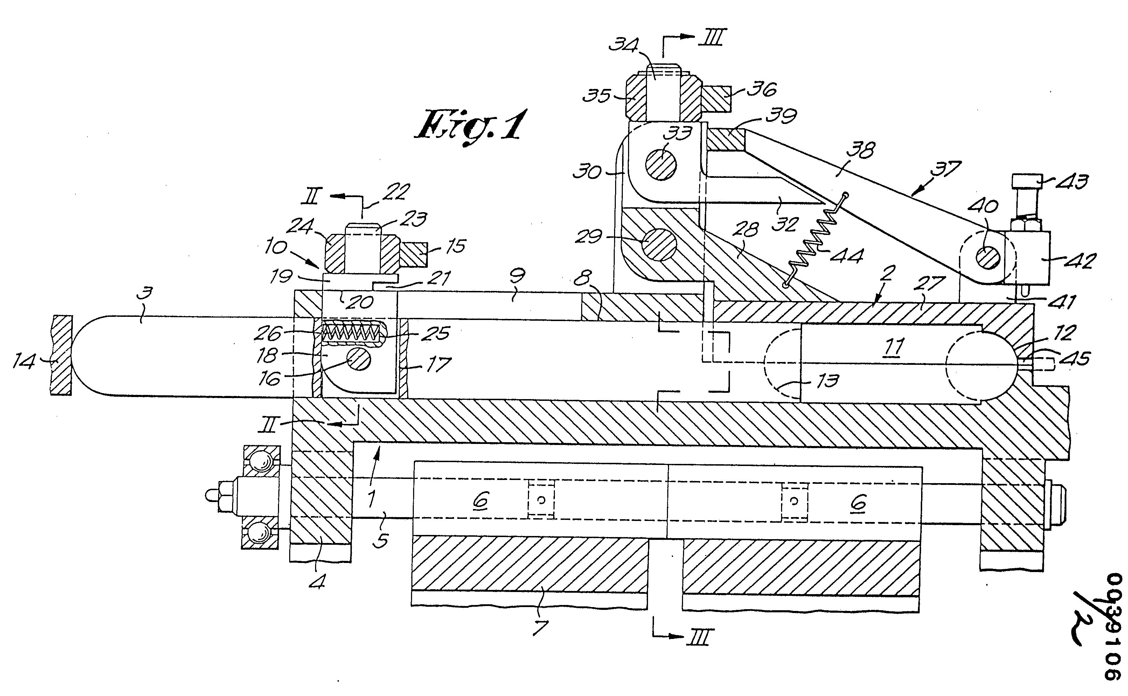

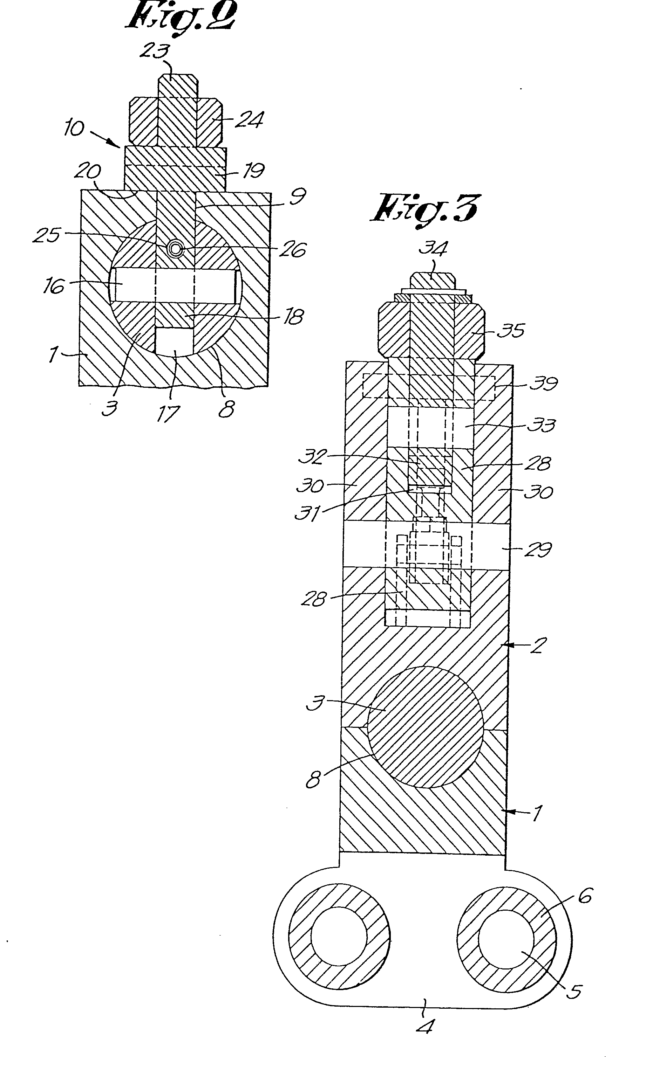

Both ends of each inner body 1 are provided with a laterally extending flange 4. Between the two flanges 4 of the same inner body 1, two axes 5 are disposed adjacent to each other in the longitudinal direction of the inner body 1. On each of said axes 1, are secured two rolls 6 running on two tracks 7 firmly secured on the above-mentioned frame. Thus, said tracks 7 are guiding the shifting of the inner body 1 and accordingly the whole die relative to said frame. Both axes 5 function simultaneously as hinged securing means on the inner bodies of the dies respectively situated before and behind. The distance between the flanges 4 of the inner bodies 1 of the successive dies is alternatively larger and smaller. Thus, the flanges 4 of two adjacent inner bodies 1 are just fitting between the flanges 4 of the inner body shown in the figures. For more clearness, the adjacent dies are not shown in Figures 2 and 3.

The dies 1, 2 are shifted as know per se, e.g. by driving one end of said axes 5. Said driving will then also not be described in detail in the following description.

On the front side, i.e. on the side situated on the left in Figure 1 and to which the punch 3 is shifted when sliding out the die, the inner body 1 of each die 1, 2 surrounds completely said punch 3. At that location, the inner body 1 forms a closed box having a cylindrical opening 8. In the wall of said box, is provided a slot 9 extending in the longitudinal direction of the box and thus in the longitudinal direction of the inner body 1 and appearing at the side of said inner body which is remote from the flanges 4. The rider 10 passes through said slot 9, said rider being mounted on the punch 3 as described hereafter.

At the back side, i.e. at the side to which the punch 3 is shifted when stamping, each inner body 1 forms only a half-box. The other half of the box is formed by the valve 2 when the latter is in closed position. The valve 2 is besides shown in said closed position in the figures. In said position, the back portion of the inner body 1 and the valve 2 forms a closed space 11 the diameter of which is equal to that of the opening 8 and which however fits to the latter. Thus, the punch 3 may also penetrate into said space 11 before moulding the lolly. At the back side, said space 11 is closed by a substantially hemispherical round 12. At its front end, the punch 3 is also provided with a similar round 13 so that, when the punch 3 is introduced to the maximum in the inner body 1, the rounds 12 and 13 are taking together the shape required for the lolly.

The space 11 is the mould space proper. The sugar material being stamped is deposited as known in said space essentially while the valve 2 is opened and when the punch 3 is retracted to the maximum. Thereafter, the valve 2 is closed and the punch 3 is pushed in.

The punch 3 is pushed in by means of a pressure element 14 which is firmly mounted on the frame. During the shifting of the mould, at a determined time, the punch 3 comes with its end projecting outside the die against said pressure element 14 and, when the mould is further shifted, said pressure element pushes the punch 3 more deeply in the die.

The punch 3 is returned to its initial position in the same manner by means of a second pressure element 15. Said second pressure element 15 is also firmly mounted on the frame of the machine and it cooperates with the rider 10.

Contrarily to the known machines, the rider 10 is not firmly mounted on the punch 3, but hingedly about an axis 16 which is directed perpendicularly to the longitudinal direction of the punch 3 and accordingly to the shifting direction thereof.

The rider 10 passes through a hole 17 extending transversally through the punch 3 in a direction perpendicular to the shifting direction of the mould and to the shifting direction of the punch 3 in said mould. Perpendicularly to the longitudinal direction, said hole 17 has a substantially rectangular cross-section. The rider 10 comprises a body 18 extending in the hole 17 and in the above-mentioned slot 9 provided in the inner body 1. Said body 18 has a rectangular cross-section the length of which is slightly smaller than the length of the cross-section of the hole 17, with a width which is equal to the width of the cross-section of the hole 17, said width being additionally equal to the width of the slot 9. The axis 16 is situated at the level of the longitudinal axis of the punch 3 so that the side of the body 18 which is directed to the end projecting outside the die, is tight fitted against the wall of the hole 17 which is situated on the same side, whereas, on the other side, in the stamping direction along which the punch 3 is shifted when stamping, a very small space is kept opened between the wall of the hole 17 and the body 18. Relative to the rest position of the rider 10 wherein the longitudinal direction thereof is perpendicular to the longitudinal direction of the punch 3, i.e. the position as shown in the figures, the body 18 and accordingly the whole rider 10 may be tilted only in the stamping direction, i.e. the direction in which the punch 3 is shifted when stamping, and not in the other direction. Then, said body 18 is always already disposed against the front wall (situated at the left in Figure 1) of the hole 17. In order to reliably not prevent said tilting in the stamping direction, the front corner of the body 18, which is the most remote from the slot 9, is however rounded.

The rider 10 comprises also a head 19 at the external edge of the inner body 1. Said head 19 is laterally thickened, i.e. it extends at both sides of the slot 9. The side of said head 19 which is directed to the body 18, is situated, at both sides of the slot 9, against the outer side of the inner body 1. Said side is indicated in Figure 1 by the reference number 20. In the movement direction of the punch 3, said head 19 has the same width as the body 18, except against the outer side of the inner body 1.

At the side directed to the stamping space 11, the lower edge of the head is cut off. Through the so formed cutting off 21, the side 20 is asymmetrically situated relative to the theoretical longitudinal surface of the rider 10 which extends through the axis 16 and which, accordingly, in the rest position of said rider 10, is oriented perpendicularly to the longitudinal direction of the punch 3. Relative to this theoretical surface, indicated by the reference number 22 in Figure 1, the side 20 is principally situated at the left thereof and only at a small extent at the right thereof, as viewed in Figure 1. As a consequence, owing to the clearance which is however present between the side 20 and the outer side of the inner body 1, the rider 10 may rotate in the stamping direction on an angle which is sufficiently large so that the edge of the side 20, which is situated forwardly in the stamping direction, may be pressed firmly against the outer side of the inner body 1 at both sides of the slot 9 and that with a sufficient force to prevent any shifting of the rider 10 and consequently, of the punch 3.

Owing to the fact that the tilting of the rider 10 in the other direction is limited and that a relatively large portion of the side 20 is situated at the side of the surface 22 which is remote from the stamping space 11, the last mentioned portion of said side 20 can never be firmly pressed against the outer side of the inner body 1. In other words, when the end of the rider 10 which projects outside the inner body 1, is pushed leftwards in Figure 1, either intentionally through the pressure element 15 or conventionally through the friction of the head 19 on the inner body 1, the rider 10 may however be freely shifted.

When the punch 3 is pushed in through the pressure element 4, the rider 10 will automatically have the tendency to tilt in this direction, not only owing to inertia, but also owing to the friction of the head 19 on the inner body 1. In fact, a true tilting of the rider 10 in this direction is impossible because it is situated in the hole 17 owing to the fact that the head 19 may slide freely on the inner body 1 so that the punch 3 may be also freely pushed in.

When the punch 3 has reached its maximum introduction position, it can no more be pushed back through itself. An infinitesimal small shifting of the punch 3 towards its initial position results immediately in the tilting of the rider 10 in the stamping direction, whereby the head 19 is firmly clamped on the outer side of the inner body 1, while preventing any shifting of the punch 3. By this way, the punch 3 is kept in its introduced position as long as required only through the rider 10 and thus without any pressure element 14 or other members.

The unlocking of the rider 10 is then obtained by slightly rotating the latter in the return direction of the punch. This rotation occurs through the same pressure element 15 which pushes back the rider 10 and consequently also the punch 3. Said pressure element 15 cooperates with a small wheel 24 which is rotatably mounted about an axis 23 provided on the head 19 of the rider. During the shifting of the mould, at a determined time, said small wheel 24 contacts the pressure element 15 and, when the mould is further shifted, the rider is pushed away from the space 11 at its end along which the head 19 is provided, said rider being thereby always pushed in the maximum tilted position in the return direction relative to the punch 3.

A pressure element is required only for introducing the punch 3 and thereafter for retracting said punch 3, but not for maintaining said punch 3 in the stamping position.

When the rider 10 can be freely tilted, the tilting of the latter in the stamping direction when an infinitesimal small shifting of the punch 3 towards its initial position occurs, is automatically obtained through the inertia of said rider 10 and through the friction of the side 20 of the head 19 on the outer side of the inner body 1. In order to reliably obtain said tilting in the stamping direction and accordingly the clamping through the rider 10, a recess 25 may be provided in the body 18 of said rider 10 on the side of the axis 16 which is directed towards the head 19, said recess being formed on the side of the body 18 which is remote from the space 11, a pressure spring 26 being also disposed in said recess. Said pressure spring 26 pushes against the wall of the hole 17, thereby tending continuously to tilt the rider 10 in the stamping direction.

The valve 2 of each die 1, 2 comprises a valve portion proper 27 fitting on the inner body 1 and, assembled therewith, a hinging arm 28 which is rotatably mounted by means of a pivoting axis 29 between two projections 30 provided on the inner body. These projections 30 are situated at the side of the slot 9 on the end of the portion of the inner body 1 which forms the closed box with the opening 8. The hinging arm 28 has a portion extending from the valve portion 27 to the pivoting axis 29, and a second portion which forms an angle therewith and which, when the valve 2 is in closed position, is parallel with the projections 30, thereby extending perpendicularly to the longitudinal axis of the inner body 1.

The last mentioned portion of the hinging arm 28 is fork-shaped at its free end. A small lever 32 is mounted in the groove 31 which is so formed at said end and which extends in the direction perpendicular to the pivoting axis 29 transversely through the arm 28. Said small lever 32 is hingedly mounted about an axis 33 which is parallel with the pivoting axis 29 and which extends between the two legs of the fork-shaped end of the hinging arm 28. Said small lever 32 is substantially L-shaped. The end of one leg is provided with a journal 34 on which a small wheel 35 is rotatably mounted. Said small wheel 35 may cooperate with a pressure element 36 which is firmly secured on the frame of the machine and which, during the shifting of the mould, causes the rotation of the small lever 32 at a determined time and, owing to the fact that, as explained hereafter, the rotation of said small lever 32 is limited and that said small lever is mounted on the hinging arm 28, said hinging arm 28 and accordingly the whole valve 2 are thereafter tilted.

The small lever 32 cooperates with a holding pawl 37 which keeps automatically the valve 2 in tight position as soon as it has been rotated in said position, e.g. through a pressure element (not shown in the Figures) acting on the small wheel 35. The holding pawl 37 keeps the valve 2 in tight position until it is removed from its blocking position by means of the small lever 32.

The holding pawl 37 consists of a long arm 38 one end of which is provided with a thickened head 39, while the other end is rotatably mounted by means of a pivoting axis 40 between two projections 41 provided on the end of the valve portion 27 which is remote from the hinging arm 28. The last mentioned end of the arm 38 is integral with a stop supporting part 42 in which a set screw 43 is screwed as a stop. At the side of the pivoting axis 40 which is remote from the head 39, the free end of the set screw 43 is directed towards the valve portion 27 and it limits the rotation of the arm 38 by bearing against said valve portion 27.

The head 39 is laterally thickened so that, in the locking position of the holding pawl 37, i.e. in the position as shown in the Figures, it bears against the two projections 30 of the inner body 1, which are situated on both sides of the hinging arm 28. Thus, in said position, any tilting of the valve 2 relative to said projections 30 and accordingly relative to the inner body 1 is not possible.

As soon as the valve 2 is closed, the holding pawl 37 is automatically brought in said locking position by means of a traction spring 44 which is firmly secured to the arm 38 and to the hinging arm 28, thereby pulling the holding pawl towards the hinging arm 28. In this locking position of the holding pawl 37, in the normal rest position of the small lever 32, the free end of one arm of said lever is situated just against the side of the arm 38 of the holding pawl 37, which is directed towards the hinging arm 28.

Now, in order to retract the holding pawl 37 from the locking position, it is sufficient to rotate slightly the small lever 32, which is controlled, as already mentioned, through the pressure element 36. Owing to the rotation of the holding pawl 37, the head 39 is brought into a position outside the free ends of the projections 30, so that said head may be shifted on said projections. As soon as the head 39 is no more against the projections 30, the valve 2 may be rotated. For this position of the holding pawl 37, the set screw 43 bears also against the valve portion 27, thereby preventing any further rotation of said holding pawl 37. When the pressure element 36 pushes further on the small wheel 35, any further rotation of the small lever 32 relative to the valve 2 is prevented because it is now retained by the holding pawl 37. As a consequence, the assembly formed by the small lever 32 and the arm 28 and thus the whole valve 2, is capable of rotating.

As soon as the space 11 is again filled up, the mould is brought at a location where the pressure element 36 is stopped. The valve 2 may fall itself by gravity in tight position or it may be rotated in tight position through an auxiliary pressure element so that, as soon as the valve is in tight position, the holding pawl 37 may be brought back into the locking position through the spring 44.

As soon as said locking is obtained, any tilting of the valve 2 is impossible without rotating again the small lever 32 so that any pressure element or another member is required for keeping the valve in tight position.

The construction of the machine is rather simple and relatively not expensive even in the cases in which, after stamping, the sugar-candy must be kept under pressure for a determined period. When the punch 3 has reached its stamping position, it is automatically blocked by the rider provided on the mould whereas, when it is rotated in its tight position, the valve 2 is also automatically kept in closed position by the holding pawl 37 which is also provided on the mould. It is not necessary to use a pressure element neither for keeping the punch 3 in the stamping position, nor for keeping the valve 2 in tight position. Owing to said characteristics, the machine may be also rather compact.

The machine may be also essentially provided with a mechanism known per se for introducing a small stick 45. For this purpose, the inner body 1 and the valve 2 are provided with the required recesses so that, in the closed position of the valve 2, at the end remote from the punch 3, a circular channel 45 is provided for introducing a small stick in the space 11. Then, the machine comprises also, per mould, a punch for introducing the small stick after stamping the sugar-candy in the space 11.

The invention is not at all limited to the previously described embodiment and numerous modifications may be applied to the described embodiment within the scope of the patent application, namely as regards the shape, the constitution, the arrangement and the number of the elements used for carrying out the invention.

More particularly, it is not necessary to provide a pressure spring in each rider for tilting the latter in the stamping direction.  Normally, said tilting occurs automatically at the appropriate time.

In addition, each mould must not be necessarily provided simultaneously with a self-clamping rider described therefor and with a holding pawl for the valve.  Thus, the self-clamping rider may be namely applied separately, e.g. in machines of the type without any valve, or in machines the valves of which are not hingedly mounted in the inner bodies, but assembled into an endless chain contacting locally the inner bodies.

In addition, the machine may comprise, per mould, two punches for moulding the lolly.  This is generally the case, e.g. for the machines without any valve in which the lolly is moulded between the two punches instead of being formed between one punch and one end of the inner body.  When the machine comprises two punches per mould, both punches are then preferably provided with a self-clamping rider as previously described.

- 1 -  **0039106**

Claims.

1.- Machine for the manufacture of sugar-candy, more particularly lollies, said machine comprising a number of moulds having each a die (1-2) and at least one punch (3) for stamping the sugar material deposited in the die (1-2) into the desired shape, said punch (3) being reciprocated in the die (1-2), said machine comprising also means for reciprocating the punches (3) in the dies (1-2), said means comprising themselves, per punch, one rider (10) mounted thereon and projecting outside the die (1-2) through an opening (9) provided therein, and at least two pressure elements (14-15) relative to which the dies (1-2) may be shifted together with the punches (3) moving therein, whereby, during said relative shifting, the punches (3) or the ends (projecting outside the die) of the riders (10) mounted on said punches (3) are contacted so that said punches (3) are pushed more deeply in the die (1-2) from their initial position or back to their initial position, characterized in that it comprises, per punch (3), one lock allowing the punch (3) to shift freely when it is introduced into the die (1-2), while blocking up immediately said punch (3) when it is shifted in the other direction, the shifting in the last mentioned direction being allowed only after unlocking.

2.- Machine according to the preceding claim, characterized in that the lock of each punch (3) is the rider (10) itself the end of which projecting outside the die (1-2) forms then a laterally thickened head (19) which may be shifted along the outer side of the die (1-2) on both sides of the opening (9) provided in the die (1-2) and through which the rider (10) passes, while cooperating with said outer side so that it can be moved freely along said outer side during the introduction of the punch (3), while being however firmly maintained by the die (1-2) without any unlocking when trying to shift the punch (3) in the other direction.

3.- Machine according to the preceding claim, characterized in

- 2 -                                    0039106

that the thickened head (19) is situated with one side imme-
diately along the outer side of the die (1-2) on both sides of
the opening (9) provided in the die (1-2) and through which the
rider (10) passes, whereas said rider (10) is in a manner
hingedly mounted about a geometrical axis (16) which, at a
distance from the head (19) of the rider (10) which is situated
outside the die (1-2), is directed transversally to the longitudinal axis of the punch (3) and thus to the shifting direction thereof so that, when the rider (10) is tilted in the
stamping direction, i.e. in the shifting direction of the
punch (3) when it is introduced into the die (1-2), said tilting occurring when the punch (3) is retracted from the die
(1-2), the above-mentioned side is firmly clamped against the
outer side of the die (1-2) and prevents the shifting, while
the machine comprises also means for tilting back the rider
(10) from the last mentioned tilted position, so that the rider (10) is no more clamped and is thus unlocked.

4.- Machine according to the preceding claim, characterized in
that the rider (10) of each die (1-2) passes in a recess (17)
provided in the punch (3), the pivoting axis (16) of the rider
(10) being situated in the punch (3) itself.

5.- Machine according to the preceding claim, characterized in
that the pivoting axis (16) of the rider (10) is situated at
the level of the longitudinal direction of the punch (3).

6.- Machine according to one of claims 3 to 5, characterized in
that the rider (10) may be tilted in the stamping direction
until the above-mentioned side of its head (19) is firmly
clamped on the die (1-2), whereas the tilting in the opposite
direction is limited and, in the maximum back tilted position
taken by the rider (10) when the punch (3) is introduced, the
above-mentioned side cannot be rigidly clamped against the
outer side of the die (1-2).

7.- Machine according to claims 4 and 6, characterized in that the back tilting of the rider (10) in the direction opposite to the stamping direction is limited by a recess (17) provided in the punch (3) in which the rider (10) is situated.

8.- Machine according to the preceding claim, characterized in that the corner of the rider (10) portion which is situated in the recess (17) provided in the punch (3) and which is situated the farthest from the head (19) and in the direction opposite to the stamping direction, is rounded concentrically about the pivoting axis (16) of the rider (10), thereby allowing a free tilting in the stamping direction.

9.- Machine according to one of claims 3 to 8, characterized in that it comprises, per mould, a resilient element (26) which is mounted between the rider (10) and the punch (3) and which tends to tilt always resiliently the rider (10) in the stamping direction.

10.- Machine according to one of claims 3 to 9, characterized in that the above-mentioned side of the rider head (19), which is situated along the outer side of the die (1-2), extends principally on the side of a theoretical surface, which is remote from the stamping location provided for the sugar material, said theoretical surface passing through the geometrical pivoting axis (16) of the rider (10), while being directed perpendicularly to the shifting direction of the punch (3), said above-mentioned side extending not or extending only slightly on the other side of said theoretical surface.

11.- Machine according to one of claims 3 to 10, characterized in that it comprises a pressure element (15) which may cooperate with the rider (10) of the moulds in order to push said rider (10) and thus the associated punch (3) of the intended mould back to their initial position, said pressure element (15) cooperating also with the rider (10) for unlocking it, i.e. for rotating it in the direction opposite to the stamping direction, thereby allowing to bring the rider (10) back to its initial position together with the punch (3).

12.- Machine for the manufacture of sugar-candy, more particularly lollies, said machine comprising a number of moulds having each a die (1-2) and at least one punch (3) for stamping the sugar material deposited in the die (1-2) into the desired shape, said punch (3) being reciprocated in the die (1-2), said machine comprising also means for reciprocating the punches (3) in the dies (1-2), said means comprising themselves, per punch (3), a rider (10) mounted thereon and projecting outside the die (1-2) through an opening (9) provided therein, and at least two pressure elements (14-15) relative to which the dies (1-2) may be shifted together with the punches (3) moving therein, whereby, during said relative shifting, the punches (3) or the ends projecting outside the die (1-2) and making part of the riders (10) mounted on said punches (3) are contacted, so that said punches (3) are pushed more deeply in the die (1-2) from their initial position or back to their initial position, the dies (1-2) comprising each additionally an inner body (1) and a valve (2) hingedly mounted thereon, characterized in that it comprises, per valve (2), a lock blocking up automatically the valve (2) in the closed position when it is closed, said machine comprising also means for retracting the locks from the locking position, thereby allowing the corresponding valves (2) to be again opened.

13.- Machine according to the preceding claim, characterized in that the lock is a holding pawl (37) which, at a distance from the pivoting axis (29) about which the valve (2) is hinged relative to the inner body (1), is, on the one hand, hingedly mounted on one of the elements formed by the inner body and the valve and, on the other hand, cooperates, through one end, with a portion of the other element, thereby extending, at least in one position, between the two elements, while preventing the shifting of both elements relative to each other, the means provided for retracting the lock from the locking position, being means for rotating the holding pawl (37) on an angle.

14.- Machine according to the preceding claim, characterized in that the holding pawl (37) is hingedly mounted on the valve (2), near the end of said valve (2) which is the farthest remote from the pivoting axis (29) of said valve (2), whereas the other end of the pawl (37) cooperates with a portion of said inner body (1), which projects outside the remainder of said inner body (1) at the side of the pivoting axis (29) of the valve (2).

15.- Machine according to one of claims 13 and 14, characterized in that the means provided for rotating the holding pawl (37) in view of unlocking comprise a small lever (32) which is hingedly mounted on one of the elements formed by the inner body (1) and the valve (2) and which may cooperate with the holding pawl (37), and also means for rotating said small lever (32).

16.- Machine according to the preceding claim, characterized in that the means for rotating the small lever (32) are formed by a pressure element (36).

17.- Machine according to one of claims 15 and 16, characterized in that the small lever (32) is hingedly mounted on the valve (2), at the side of the pivoting axis (29).

18.- Machine according to claims 16 and 17, characterized in that the pressure element (36) provided for rotating the small lever (32) in order to retract the holding pawl (37) from the locking position, is the same pressure element (36) as that provided for rotating the valve (2) in opened position.

19.- Machine according to one of claims 17 and 18, characterized in that the projecting portion of the inner body (1) forms a fork between the legs of which the small lever (32) is rotatably mounted, whereas the end of the holding pawl (37), which cooperates with said projecting portion, forms a thickened head (39) which may bear against both legs of the fork-shaped

projecting portion.

20.- Machine according to one of claims 17 to 19, characterized in that, at the side of the pivoting axis (40) of the holding pawl (37) which is opposite to its end cooperating with the inner body (1), said holding pawl (37) is provided with a stop (43) cooperating with the valve (2), thereby limiting the rotation of the holding pawl (37) relative to the valve (2), said valve (2) being also rotated when said holding pawl (37) is sufficiently rotated.

21.- Machine according to the preceding claim, characterized in that the stop (43) may be provided on the holding pawl (37).

22.- Machine according to one of claims 17 to 21, characterized in that it comprises, per valve (2), a spring (44) which is mounted between the holding pawl (37) and the valve (2) and which tends continuously to pull the holding pawl (37) to the locking position.

23.- Machine according to claims 18 and 20, characterized in that the small lever (32) is L-shaped one leg of which cooperates with the holding pawl (37) , while the other leg carries a small axis (34) provided with a small wheel (35) cooperating with the pressure element (36).

24.- Mould of a machine according to one of the preceding claims.

*Fig.1*

**Fig.2**

**Fig.3**